# EUROPÄISCHE PATENTSCHRIFT

(11) **EP 2 104 546 B1**
(45) Veröffentlichungstag und Bekanntmachung des Hinweises auf die Patenterteilung: **15.09.2010**
(21) Anmeldenummer: 07856885.4
(22) Anmeldetag: 19.12.2007
(51) Int. Cl.: B01D 35/30, C02F 9/00

(54) **FILTERVORRICHTUNG UND FILTERAUFNAHME FÜR EIN WASSERABGABEGERÄT SOWIE WASSERABGABEGERÄT MIT MINDESTENS EINER FILTERVORRICHTUNG UND MINDESTENS EINER FILTERAUFNAHME**
FILTERING DEVICE AND FILTER HOLDER FOR A WATER DISPENSING DEVICE AND WATER DISPENSING DEVICE WITH AT LEAST ONE FILTERING DEVICE AND AT LEAST ONE FILTER HOLDER
DISPOSITIF DE FILTRATION ET LOGEMENT DE FILTRE POUR UN APPAREIL DISTRIBUTEUR D'EAU, ET APPAREIL DISTRIBUTEUR D'EAU POURVU D'AU MOINS UN DISPOSITIF DE FILTRATION ET D'AU MOINS UN LOGEMENT DE FILTRE

(30) Priorität: 22.12.2006 DE 102006062351
(43) Veröffentlichungstag der Anmeldung: 30.09.2009
(73) Patentinhaber: Alfred Kärcher GmbH & Co. KG, 71364 Winnenden (DE)
(72) Erfinder: SCHWARZ, Andreas, 71334 Waiblingen (DE); MAIER, Norbert, 71554 Weissach (DE)
(74) Vertreter: Hoeger, Stellrecht & Partner Patentanwälte
(86) Internationale Anmeldenummer: PCT/EP2007/011162
(87) Internationale Veröffentlichungsnummer: WO 2008/077549

(56) Entgegenhaltungen:
- EP-A- 0 818 228
- EP-A- 1 637 206
- WO-A-2004/028661
- DE-A1- 19 905 601

## Beschreibung

Die Erfindung betrifft eine Filtervorrichtung für ein Wasserabgabegerät, das insbesondere zur Abgabe von Trinkwasser ausgelegt ist, mit den Merkmalen des Oberbegriffes von Patentanspruch 1.

Außerdem betrifft die Erfindung eine mit der Filtervorrichtung verbindbare Filteraufnahme für ein Wasserabgabegerät.

Darüber hinaus betrifft die Erfindung ein Wasserabgabegerät, umfassend mindestens eine Filtervorrichtung und mindestens eine mit der Filtervonichtung verbindbare Filteraufnahme.

Die Verbindungseinrichtung einer üblichen Filtervorrichtung umfasst häufig Verbindungselemente, die mit korrespondierenden Verbindungselementen der Filteraufnahme eine Bajonettverbindung ausbilden können. Zur Herstellung der Bajonettverbindung ist eine präzise Ausrichtung der gegenseitigen Verbindungselemente und anschließend eine kombinierte Steck-Dreh-Bewegung vonnöten. Dies erschwert einem Benutzer das Verbinden der Filtervorrichtung mit der Filteraufnahme.

Aus der EP-A-0 818 228 ist eine Einwegfiltervorrichtung bekannt mit einem Einlass und einem Auslass für die zu filtrierende Flüssigkeit, die nach oben von einer Stirnplatte abstehen. Die Stirnplatte bildet seitlich vorstehende Flansche, die in Schlitze eines Verbindungsmoduls eingeführt werden können. Das Verbindungsmodul ist verschwenkbar an einem Verteilerblock gehalten. Zum Abnehmen der Filtervorrichtung wird zunächst eine Verriegelung gelöst, dann kann das Verbindungsmodul zusammen mit der Filtervorrichtung um eine Schwenkachse verschwenkt werden, so dass gleichzeitig der Einlass und der Auslass mit komplementären Anschlüssen außer Eingriff gelangen, und anschließend kann die Filtervorrichtung dem Verbindungsmodul entnommen werden.

Die EP-A-1 637 206 offenbart eine Filtervorrichtung, an deren Filtergehäuse oberseitig eine Verbindungseinrichtung angeordnet ist. Die längliche Verbindungseinrichtung weist an einem ersten Ende einen Drehsteg auf, und an einem zweiten Ende ist ein Rasthaken angeordnet. Dazwischen sind nebeneinander ein Einlass und ein Auslass für die zu filtrierende Flüssigkeit positioniert. Nach Lösen des Rasthakens kann die Verbindungseinrichtung zusammen mit dem Filtergehäuse um die durch den Drehsteg definierte Schwenkachse verschwenkt werden. Dabei gelangen gleichzeitig der Einlass und der Auslass mit komplementären Anschlüssen außer Eingriff.

Eine Filtervorrichtung mit den Merkmalen des Oberbegriffes von Patentanspruch 1 wird in der DE 199 05 601 A1 beschrieben. Diese Filtervorrichtung weist auf ihrer Oberseite einen Einlass auf, über den die zu filtrierende Flüssigkeit zugeführt werden kann, und an der Unterseite der Filtervorrichtung kann die gefilterte Flüssigkeit entnommen werden. Zum Anschluss an eine Flüssigkeitszuführung weist die Filtervorrichtung eine Verbindungseinrichtung auf mit zwei von einem Anschlusskasten seitlich abstehenden Zapfen und einem Rasthaken, der auf der den Zapfen abgewandten Seite des Anschlusskastens absteht. Der Anschlusskasten weist mittig den Einlass für die zu filtrierende Flüssigkeit auf. Die Flüssigkeitszuführung weist an einem Boden eine Öffnung auf, und an einer ersten Seite der Öffnung sind nebeneinander zwei Schlitze angeordnet, und an einer zweiten Seite der Öffnung ist eine Hakenaufnahme positioniert. Die Schlitze nehmen die Zapfen der Filtervorrichtung auf, die um die gemeinsame Längsachse der Zapfen verschwenkt werden kann, bis der Rasthaken in die Hakenaufnahme einrastet.

Aufgabe der vorliegenden Erfindung ist es, eine Filtervorrichtung sowie eine Filteraufnahme der eingangs genannten Art bereitzustellen, die einfacher gegeneinander ausrichtbar und miteinander verbindbar sind.

Diese Aufgabe wird erfindungsgemäß durch eine Filtervorrichtung mit des Merkmalen von Patentanspruch 1 gelöst.

Eine mit der Filtervorrichtung zu verbindende Filteraufnahme weist vorzugsweise zum ersten und zum zweiten Verbindungselement korrespondierende Aufnahmeverbindungselemente auf. Das zum ersten Verbindungselement der Filtervorrichtung korrespondierende erste Aufnahmeverbindungselement der Filteraufnahme weist bevorzugt ein in der Aussparung anordenbares Ausrichtglied auf. Dieses definiert einen ersten Ausrichtpunkt. Ein zweiter Ausrichtpunkt ist durch das zweite Verbindungselement der Filtervorrichtung gegeben, das an dem korrespondierenden zweiten Aufnahmeverbindungselement der Filteraufnahme anordenbar ist. Die Ausrichtachse verläuft durch die beiden Ausrichtpunkte. Der auf der Ausrichtachse angeordnete Wasseranschluss kann in der Praxis so gegenüber einem an der Filteraufnahme angeordneten korrespondierenden Leitungsanschluss zuverlässig ausgerichtet und somit auf einfache Weise eine dichte Verbindung des Wasseranschlusses mit dem Leitungsanschluss sichergestellt werden.

Das erste und das zweite Befestigungssegment sind bezüglich einer die Ausrichtachse umfassenden Ebene symmetrisch zueinander ausgebildet und das zweite Verbindungselement ist symmetrisch zu derselben Ebene ausgebildet. Der Wasseranschluss befindet sich innerhalb eines gedachten Dreieckes, dessen Ecken durch das erste und das zweite Befestigungssegment sowie das zweite Verbindungselement definiert sind. Durch die symmetrische Ausgestaltung ist es möglich, eine besonders zuverlässige dichte Verbindung am Wasseranschluss zu erzielen.

Erfindungsgemäß sind beide Wasseranschlüsse auf der Ausrichtachse zwischen dem ersten und dem zweiten Verbindungselement angeordnet. Damit kann beim Ausrichten der Filtervorrichtung gegenüber der Filteraufnahme auch der zweite Wasseranschluss mit ausgerichtet werden. Im Falle der zuletzt beschriebenen symmetrischen Ausbildung von Befestigungssegmenten und zweite Verbindungselement kann somit auch am zweiten Wasseranschluss eine besonders zuverlässige dichte Verbindung erzielt werden.

Bei der erfindungsgemäßen Filtervorrichtung sind das erste und das zweite Befestigungssegment als von einer Stirnseite des Filtergehäuses abstehende Haken mit Hakenaufnahmen gebildet, in denen an der Filteraufnahme angeordnete Vorsprünge anordenbar sind, wobei die Haken eine quer zur Ausrichtachse orientierte Schwenkachse definieren. Hierbei handelt es sich um eine einfach zu handhabende und einbaufreundliche Ausgestaltung. An der Filteraufnahme angeordnete Vorsprünge können in den Hakenaufnahmen angeordnet und von den Haken um- bzw. hintergriffen werden. Die Filtervorrichtung kann daher an der Filteraufnahme eingehängt und daraufhin um die quer und vorzugsweise senkrecht zur Ausrichtachse orientierte Schwenkachse geschwenkt werden. Dadurch kann sichergestellt werden, dass das zweite Verbindungselement an seinem korrespondierenden zweiten Aufnahmeverbindungselement der Filteraufnahme angeordnet und somit die Filtervorrichtung gegenüber der Filteraufnahme ausgerichtet wird. Weil die Haken an der Stirnseite des Filtergehäuses gebildet sind, ist für die Montage nur wenig Raum erforderlich. Dies begünstigt die Montage in schmalen Bauräumen und erlaubt es, zwei Filtervorrichtungen mit geringem Abstand voneinander mit korrespondierenden Filteraufnahmen zu verbinden.

Gemäß der Erfindung sind an den Wasseranschlüssen Entriegelungselemente angeordnet, mit denen beim Verbinden der Filtervorrichtung mit der Filteraufnahme an der Filteraufnahme, angeordnete Ventile betätigbar sind. Beim Verbinden der Filtervorrichtung mit der Filteraufnahme können mittels der Entriegelungselemente die Ventile aus einer Sperrstellung in eine Durchflussstellung überführt werden. Dadurch lässt sich ohne weiteres Zutun des Benutzers eine Strömungsverbindung durch die Filtervorrichtung ausbilden.

Von Vorteil ist es, wenn das Filtergehäuse längserstreckt ausgebildet ist und wenn die Verbindungseinrichtung und die Wasseranschlüsse an einem Kopfende des Filtergehäuses angeordnet sind.

Vorzugsweise sind das erste und das zweite Verbindungselement relativ zueinander beweglich und umfassen Vorsprünge, mittels derer an der Filteraufnahme angeordnete Vorsprünge um- oder hintergreifbar sind. Hierbei handelt es sich um eine konstruktiv besonders einfache Möglichkeit, um die Filtervorrichtung mit der Filteraufnahme zu verbinden. Durch eine Relativbewegung von erstem und zweitem Verbindungselement kann ein Um- oder Hintergriff mit den Vorsprüngen der Filteraufnahme gebildet oder aufgehoben werden, so dass die Filtervorrichtung mit der Filteraufnahme verbindbar bzw. von ihr lösbar ist. Besonders bevorzugt sind das erste und das zweite Verbindungselement durch eine auf Materialelastizität beruhende Weise gegeneinander beweglich, d.h. das erste und/oder das zweite Verbindungselement können elastich verformbar sein.

Günstig ist es, wenn die Hakenaufnahmen dem zweiten Verbindungselement zugewandt sind, denn dadurch wird die Herstellung der Verbindung zwischen Filtervorrichtung und Filteraufnahme zusätzlich vereinfacht.

Von Vorteil ist es, wenn das zweite Verbindungselement als von einem Kopfende des Filtergehäuses über die am Kopfende gebildete Stirnseite hinaus abstehender Rasthaken ausgebildet ist, der mit einer an der Filteraufnahme angeordneten Rastaufnahme eine Verrastung bilden kann. Dadurch lässt sich die Filtervorrichtung auf besonders einfache Weise mit der Filteraufnahme verbinden. In Kombination mit der vorstehend beschriebenen Ausführungsform kann vorgesehen sein, dass nach dem Verschwenken der Filtervorrichtung um die Schwenkachse der Rasthaken die Rastaufnahme um- oder hintergreift, um die Verrastung zu bilden. Das als Rasthaken ausgebildete zweite Verbindungselement kann eine Materialelastizität aufweisen und ist dann relativ zum ersten Verbindungselement beweglich.

Es kann vorgesehen sein, dass auch das erste und/oder das zweite Befestigungssegment als Rasthaken ausgebildet ist.

Als günstig hat es sich erwiesen, wenn die Filtervorrichtung ein Betätigungsglied aufweist, mit dem die Verbindungseinrichtung von einer Verbindungsstellung, in der die Filtervorrichtung mit der Filteraufnahme verbunden ist, in eine Lösestellung überführbar ist, in der die Filtervorrichtung von der Filteraufnahme lösbar ist. Mittels des Betätigungsgliedes kann das Lösen der Filtervorrichtung von der Filteraufnahme initliert werden.

Bevorzugt ist das zweite Verbindungselement mittels des Betätigungsgliedes mit einer Lösekraft beaufschlagbar, um die Verbindung mit der Filteraufnahme zu lösen. Ist das zweite Verbindungselement beispielsweise als Rasthaken ausgebildet, der mit einer an der Filteraufnahme angeordneten Rastaufnahme zusammenwirkt, so kann der Rasthaken durch die Lösekraft aus seiner Ruhestellung ausgerückt werden, um die Verrastung mit der Rastaufnahme zu lösen.

Bevorzugt ist das Betätigungsglied als längs der Ausrichtachse ausgerichteter Stößel ausgebildet, der am Kopfende des Filtergehäuses verschieblich gelagert ist, wobei sein erstes Ende einem Benutzer zugänglich nahe dem ersten Verbindungselement angeordnet ist und sein zweites Ende am zweiten Verbindungselement anliegt. Dies erlaubt es dem Benutzer, eine Lösekraft auf den Stößel auszuüben, die auf das zweite Verbindungselement übertragen wird. Dadurch kann dieses aus der Ruhestellung ausgerückt und die Filtervorrichtung von der Filteraufnahme gelöst werden.

Von Vorteil ist es, wenn der Stößel das Kopfende des Filtergehäuses durch-greift. Am Kopfende des Filtergehäuses kann eine Führung für den Stößel vorgesehen sein, innerhalb derer der Stößel besonders zuverlässig lagerbar ist.

Günstig ist es, wenn die Verbindungseinrichtung mindestens ein Stützelement aufweist, das bei mit der Filteraufnahme verbundener Filtervorrichtung an der Filteraufnahme anliegt. Mittels des Stützelementes, das bevorzugt starr ausgebildet ist, kann ein definierter Abstand zwischen Filtervorrichtung und Filteraufnahme sichergestellt werden. Dies wirkt sich im Betrieb zuverlässig auf die Funktion der Filtervorrichtung aus.

Das Filtermedium kann beispielsweise als Ultrafiltrationsmembran ausgestaltet sein. Somit können selbst kleine Fremdkörper und darüber hinaus eine Vielzahl von Keimen und Mikroorganismen aus dem Wasser herausgefiltert werden. Das von einer derartigen Filtervorrichtung gefilterte Wasser weist folglich eine hohe Reinheit auf.

Bevorzugt sind die wasserführenden Komponenten der Filtervorrichtung aus Materialien gefertigt, die bei einer zur Pasteurisierung von Wasser erforderlichen Temperatur stabil sind. Unter "Pasteurisierung" wird vorliegend das Abtöten von sich im Wasser befindenden Keimen und Mikroorganismen verstanden. Dies erfolgt durch Erhitzen des Wassers auf eine bestimmte Temperatur für eine gewisse Zeitdauer, wobei die Dauer um so kürzer sein kann, je höher die Temperatur ist. Bei einer bevorzugten Ausgestaltung der Filtervorrichtung hat es sich zum Erzielen eines hinreichend guten Entkelmungsergebnisses als ausreichend erwiesen, wenn die Filtervorrichtung für 15 Minuten mit heißem Wasser von einer Temperatur von 65° C durchspült wird.

Wie erwähnt, betrifft die Erfindung auch eine mit der Filtervorrichtung verbindbare Filteraufnahme für ein Wasserabgabegerät. Die eingangs genannte Aufgabe wird erfindungsgemäß durch eine Filteraufnahme mit den Merkmalen von Patentanspruch 12 gelöst.

Wie bereits im Zusammenhang mit der Erläuterung der erfindungsgemäßen Filtervorrichtung beschrieben, kann das Ausrichtglied in der an der Filtervorrichtung angeordneten Aussparung angeordnet werden. Darüber hinaus bedarf es lediglich der Anordnung des zweiten Aufnahmeverbindungselementes am zweiten Verbindungselement der Filtervorrichtung, um eine Ausrichtung der Filtervorrichtung gegenüber der Filteraufnahme zu erreichen. Durch die Anordnung der beiden Leitungsanschlüsse auf der Achse der Filteraufnahme wird somit sichergestellt, dass diese gegenüber den Wasseranschlüssen der Filtervorrichtung ausgerichtet wird.

Gemäß der Erfindung umfassen die Leitungsanschlüsse Ventile, die durch an den Wasseranschlüssen angeordnete Entriegelungselemente betätigbar sind. Beim Verbinden der Filtervorrichtung mit der Filteraufnahme können die Ventile mittels der Entriegefungselemente aus einer Sperrstellung in eine Durchflussstellung überführt werden, um eine Strömungsverbindung herzustellen. Bevorzugt sind die Ventile als Rückschlagventile ausgebildet, die beim Lösen der Filtervorrichtung von der Filteraufnahme selbsttätig in die Sperrstellung zurückkehren.

Das erste und das zweite Aufnahmebefestigungssegment sind bevorzugt bezüglich einer die Achse der Filteraufnahme umfassenden Ebene symmetrisch zueinander ausgebildet, und das zweite Aufnahmeverbindungselement ist bevorzugt symmetrisch zu derselben Ebene ausgebildet.

Ferner sind vorteilhafterweise beide Leitungsanschlüsse auf der Achse der Filteraufnahme zwischen dem Ausrichtglied und dem zweiten Aufnahmeverbindungselement angeordnet.

Günstig ist es, wenn das Ausrichtglied als vom Träger abstehender Steg ausgebildet ist, an dessen dem Träger abgewandtem Ende zwei quer zur Achse der Filteraufnahme orientierte Lagerzapfen angeordnet sind, die das erste und das zweite Aufnahmebefestigungssegment bilden. Sofern das erste und das zweiten Befestigungssegment der Filtervorrichtung als Haken ausgebildet sind, kann die Filtervorrichtung mittels der Haken an den Lagerzapfen eingehängt werden. Daraufhin kann die Fütervorrichtung um eine durch die Lagerzapfen definierte Schwenkachse verschwenkt werden, um das zweite Verbindungselement der Filtervorrichtung am zweiten Aufnahmeverbindungselement der Filteraufnahme anzuordnen und damit zu verbinden.

Vorteilhafterweise umfasst das zweite Aufnahmeverbindungselement eine Rastaufnahme. Ein als Rasthaken ausgebildetes zweites Verbindungselement der Filtervorrichtung kann die Rastaufnahme um- oder hintergreifen und mit dieser eine Verrastung bilden. Durch eine das zweite Verbindungselement beaufschlagende Lösekraft kann die Verrastung gelöst werden.

Wie eingangs erwähnt, betrifft die Erfindung auch ein Wasserabgabegerät, das mindestens eine Filtervorrichtung und mindestens eine mit der Filtervorrichtung verbindbare Filteraufnahme umfasst. Ein bevorzugtes Wasserabgabegerät ist zur dosierten Abgabe von Trinkwasser ausgelegt.

Es ist Aufgabe der vorliegenden Erfindung, ein derartiges Wasserabgabegerät bereitzustellen, bei dem die Filtervorrichtung für einen Benutzer einfacher mit der Filteraufnahme verbindbar ist.

Diese Aufgabe wird erfindungsgemäß durch ein Wasserabgabegerät mit mindestens einer Filtervorrichtung und mindestens einer Filteraufnahme der voranstehend genannten Art gelöst. Wie obenstehend erläutert, lassen sich eine erfindungsgemäße Filtervorrichtung und eine erfindungsgemäße Filteraufnahme auf einfache Weise gegeneinander ausrichten. Dies vereinfacht es dem Benutzer, die Filtereinrichtung mit der Filteraufnahme zu verbinden.

Die nachfolgende Beschreibung bevorzugter Ausführungsformen dient im Zusammenhang mit der Zeichnung der näheren Erläuterung. Es zeigen:
- Figur 1:: eine perspektivische Teilansicht einer erfindungsgemäßen Filtervorrichtung;
- Figur 2:: eine Draufsicht auf die Filtervorrichtung aus Figur 1;

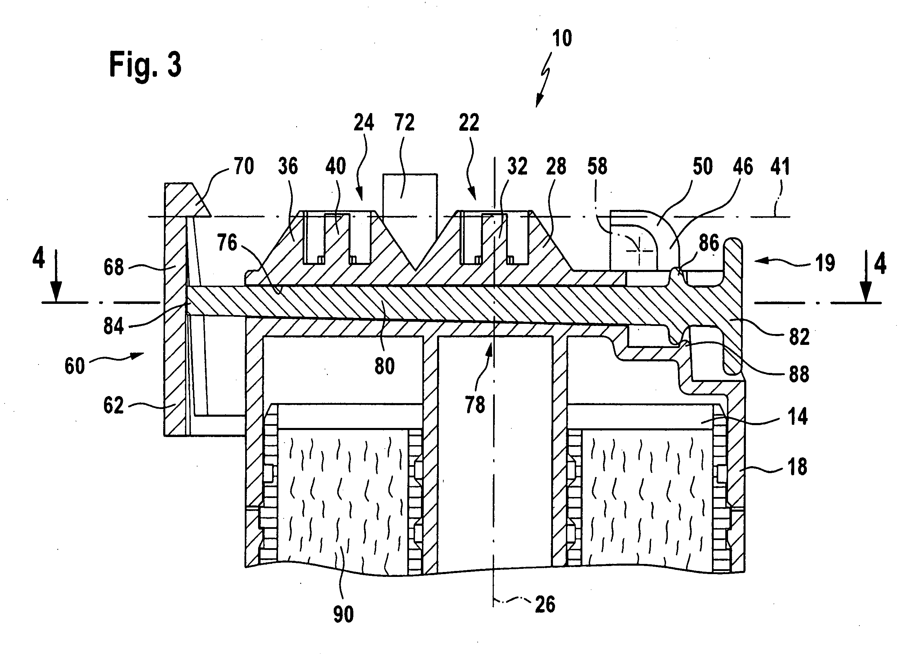

- Figur 3:: eine Schnittansicht der Filtervorrichtung längs der Linie 3-3 in Figur 1;
- Figur 4:: eine Schnittansicht der Filtervorrichtung längs der Linie 4-4 in Figur 3;
- Figur 5:: eine perspektivische Ansicht einer erfindungsgemäßen Filterauf- nahme und
- Figur 6:: eine Schnittansicht ähnlich Figur 3, wobei die Filtervorrichtung mit der Filteraufnahme verbunden ist.

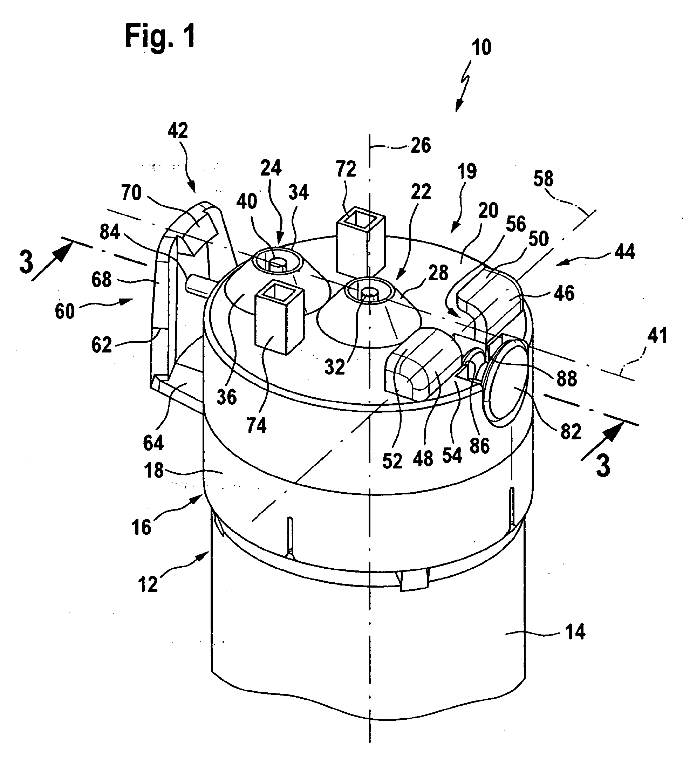

In Figur 1 ist eine bevorzugte Ausführungsform der erfindungsgemäßen Filtervorrichtung teilweise dargestellt und insgesamt mit dem Bezugszeichen 10 belegt. Sie weist ein in der Zeichnung nur teilweise dargestelltes zylindrisches Filtergehäuse 12 auf, das einen Filtertopf 14 sowie eine stirnseitig auf ein Kopfende 16 des Filtertopfes 14 aufgerastete Filterkappe 18 umfasst, die ein Kopfende 19 des Filtergehäuses 12 bildet.

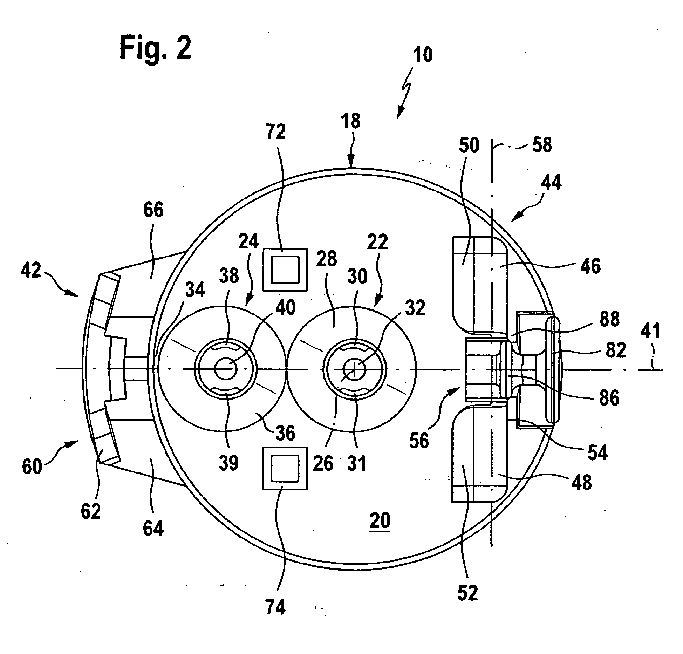

An einer an der Filterkappe 18 gebildeten Stirnwand 20 des Filtergehäuses 12 umfasst die Filtervorrichtung 10 zwei Wasseranschlüsse in Form eines Wasserzulaufanschlusses 22 und eines Wasserablaufanschlusses 24, über die zu filterndes Wasser in das Filtergehäuse 12 hinein bzw. gefiltertes Wasser aus dem Filtergehäuse 12 herausfließen kann. Der Wasserzulaufanschluss 22 ist zentral auf der kreisförmigen Stirnwand 20 angeordnet. Er umfasst ein von der Stirnwand 20 entlang einer Zylinderachse 26 des Filtergehäuses 12 abstehendes kegelstumpfförmiges Rohrstück 28, das an der Stirnwand 20 angeordnete Zulauföffnungen 30 und 31 ins Innere des Filtergehäuses 12 einfasst (Figur 2). Des weiteren fasst das Rohrstück 28 ein Entriegelungselement ein in Form eines von der Stirnwand 20 längs der Zylinderachse 26 abstehenden Entriegelungsstiftes 32.

Der Wasserablaufanschluss 24 ist neben dem Wasserzulaufanschluss 22 an einem äußeren Randbereich 34 der Stirnwand 20 angeordnet. Ebenso wie der Wasserzulaufanschluss 22 weist er ein Rohrstück 36 auf, das von der Stirnwand 20 in Richtung der Zylinderachse 26 absteht und kegelstumpfförmig ausgebildet ist. Es fasst an der Stirnwand 20 gebildete Ablauföffnungen 38 und 39 für aus dem Filtergehäuse 12 herausfließendes Wasser ein (Figur 2). Darüber hinaus fasst das Rohrstück 36 ein Entriegelungselement ein in Form eines von der Stirnwand 20 längs der Zylinderachse 26 abstehenden Entriegelungsstifts 40.

Der Wasserzulaufanschluss 22 und der Wasserablaufanschluss 24 liegen auf einer als Ausrichtachse 41 bezeichneten Achse, die senkrecht zur Zylinderachse 26 orientiert ist und in einer zu der von der Stirnwand 20 definierten Ebene parallelen Ebene liegt. Eine durch die Ausrichtachse 41 und die Zylinderachse 26 aufgespannte Ebene stellt eine Symmetrieebene der Filtervorrichtung 10 dar.

Die Filtervorrichtung 10 weist eine Verbindungseinrichtung 42 auf, mit der sie mit einer untenstehend beschriebenen Filteraufnahme verbindbar ist. Die Verbindungseinrichtung 42 ist an der Filterkappe 18 angeordnet. Sie umfasst ein erstes Verbindungselement 44, das ein erstes Befestigungssegment 46 sowie ein zweites Befestigungssegment 48 aufweist, die als Haken 50 bzw. 52 ausgebildet sind. Die Haken 50 und 52 sind an einem dem Randbereich 34 diametral gegenüberliegenden Randbereich 54 der Stirnwand 20 angeordnet. Von dieser stehen die Haken 50 und 52 in die dem Filtertopf 14 abgewandte Richtung nach oben ab. Sie sind bogenförmig gekrümmt. Die Haken 50 und 52 sind bezüglich der Symmetrieebene symmetrisch zueinander ausgebildet und voneinander über eine vom ersten Verbindungselement 44 umfasste und auf der Ausrichtachse 41 angeordnete Aussparung 56 beabstandet. Durch die von den Haken 50 und 52 gebildeten Hakenaufnahmen ist eine senkrecht zur Ausrichtachse 41 und parallel zur Stirnwand 20 ausgerichtete Schwenkachse 58 definiert.

Die Verbindungseinrichtung 42 umfasst darüber hinaus ein zweites Verbindungselement 60 in Form eines Rasthakens 62. Der Rasthaken 62 ist über zwei Stege 64 und 66, die von der Filterkappe 18 nahe der Stirnwand 20 parallel zur Ausrichtachse 41 seitlich abstehen, an der Filterkappe gehalten. Ein Hakenabschnitt 68 verläuft parallel zur Zylinderachse 26 und steht über die Stirnwand 20 hervor.

Der Rasthaken 60 ist an der Filterkappe 18 an der dem ersten Verbindungselement 44 diametral gegenüberliegenden Seite, nahe des Randbereiches 34, angeordnet. An seinem freien Ende weist der Hakenabschnitt 68 eine Rastnase 70 auf, die dem ersten Verbindungselement 44 und insbesondere dessen Aussparung 56 zugewandt ist. Der Rasthaken 62 ist symmetrisch zu der Symmetrieebene der Filtervorrichtung 10 ausgebildet. Die Rastnase 70 liegt wie der Wasserzulaufanschluss 22, der Wasserablaufanschluss 24 sowie die Aussparung 56 des ersten Verbindungselementes 44 auf der Ausrichtachse 41.

Von der Stirnwand 20 stehen parallel zur Zylinderachse 26 ausgerichtet zwei quaderförmige Stützelemente 72 und 74 ab, die bezüglich der Symmetrieebene symmetrisch zueinander ausgebildet sind.

Die Filterkappe 18 weist an ihrer der Stirnwand 20 abgewandten Innenseite 76 eine Lageraufnahme 78 auf, in der ein Stößel 80, der längs der Ausrichtachse 41 orientiert ist, verschieblich gelagert ist. Sein erstes Ende weist einen nahe dem ersten Verbindungselement 44 angeordneten und von einem Benutzer betätigbaren Druckknopf 82 auf. Der Stößel 80 durchgreift die Filterkappe 18, so dass sein dem Druckknopf 82 gegenüberliegendes Ende 84 am Hakenabschnitt 68 des Rasthakens 62 anliegt. Nahe dem Druckknopf 82 umfasst der Stößel einen Haltering 86, der an einem von der Filterkappe 18 umfassten Hinterschnitt 88 anliegt, so dass der Stößel 80 gegen Herausgleiten aus der Lageraufnahme 78 gesichert ist.

Indem ein Benutzer den Druckknopf 82 des Stößels 80 mit einer auf den Rasthaken 62 gerichteten Kraft beaufschlagt, wird dieser aus seiner Ruhestellung ausgerückt, so dass sich die Rastnase 70 von den Haken 50 und 52 entfernt. Der Rasthaken 62 kehrt nach dem Ende der Kraftbeaufschlagung in Folge seiner Materialelastizität wieder in seine Ruhestellung zurück.

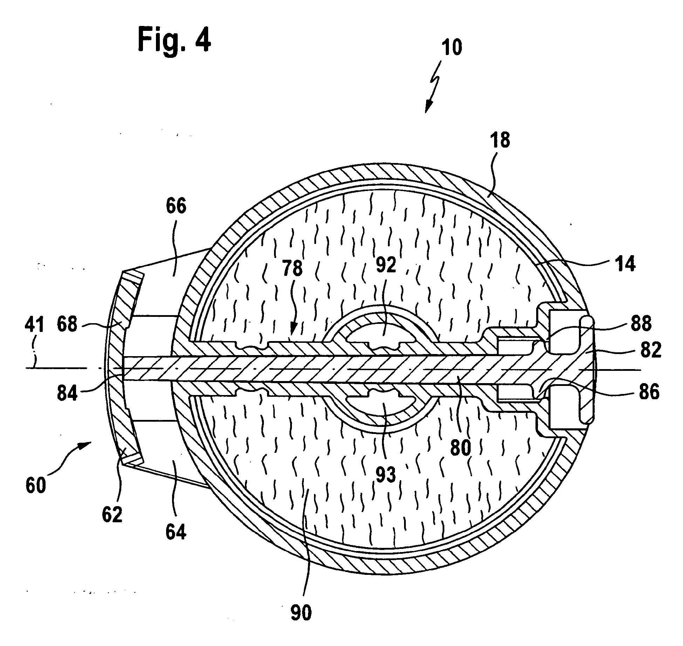

Zur bestimmungsgemäßen Wasserfilterung umfasst die Filtervorrichtung 10 als Filtermedium beispielsweise eine Ultrafiltrationsmembran 90, die hohlzylindrisch ausgebildet ist und die die Innenwände des Filtertopfes 14 auskleidet. Durch die Zulauföffnungen 30 und 31 eintretendes zu filterndes Wasser gelangt parallel zur Zylinderachse 26 durch zentrale Kanäle 92 und 93 fließend (Figur 4) in einen in der Zeichnung nicht gezeigten Bereich des Filtergehäuses 12. Von dort kann es durch die Ultrafiltrationsmembran 90 hindurch fließen, die in der Lage ist, neben sehr kleinen Fremdkörpern auch Keime und Mikroorganismen aus dem Wasser zu filtern. Das gefilterte Wasser verlässt das Filtergehäuse 12, wie bereits erwähnt, durch die Ablauföffnungen 38 und 39.

Die wasserführenden Komponenten der Filtervorrichtung 10 sind aus Materialien gefertigt, die bei einer zur Pasteurisierung von Wasser erforderlichen Temperatur thermisch stabil sind. Unter "Pasteurisierung" wird vorliegend das Abtöten von im Wasser vorhandenen Keimen und Mikroorganismen durch Aufheizen des Wassers auf eine bestimmte Temperatur für eine bestimmte Zeitdauer verstanden. Bei einer Ausgestaltung der Filtervorrichtung 10 hat es sich zur Erzielung eines guten Entkeimungsergebnisses als günstig erwiesen, wenn die Filtervorrichtung 10 für eine Zeitdauer von 15 Minuten mit heißem Wasser mit einer Temperatur von 65° C durchspült wird.

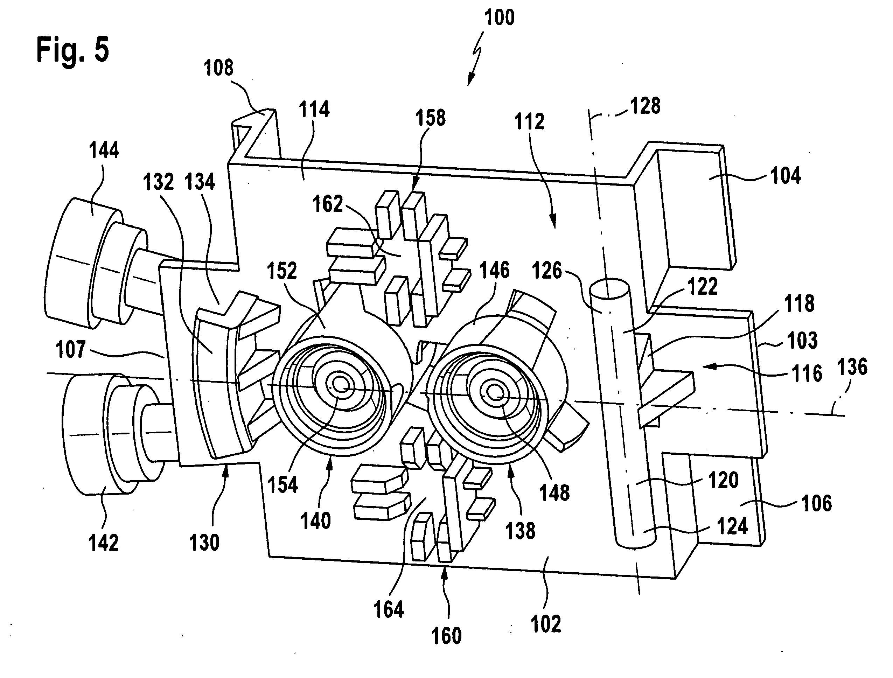

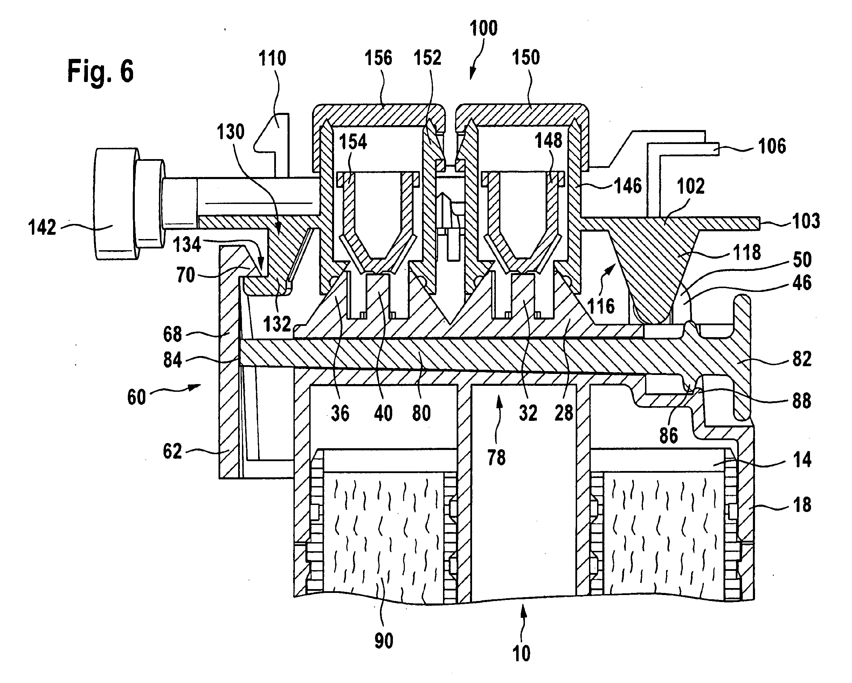

Die Erfindung betrifft auch eine Filteraufnahme, die mit der Filtervorrichtung 10 verbindbar ist. Eine bevorzugte Ausführungsform der erfindungsgemäßen Filteraufnahme ist in den Figuren 5 und 6 gezeigt und dort insgesamt mit dem Bezugszeichen 100 belegt.

Die Filteraufnahme 100 umfasst eine im Wesentlichen rechteckförmige Trägerplatte 102, die eine Schmalseite 103 aufweist, an der von der Trägerplatte 102 zwei Montagewinkel 104 und 106 seitlich abstehen. Auf der der Schmalseite 103 gegenüberliegenden Schmalseite 107 der Trägerplatte 102 stehen von dieser zwei Rasthaken 108 und 110 seitlich ab (Rasthaken 108: Figur 5, Rasthaken 110: Figur 6). Die Montagewinkel 104 und 106 sowie die Rasthaken 108 und 110 dienen der Befestigung der Filteraufnahme 100 an einer geeigneten Haltevorrichtung eines Wasserabgabegerätes, das die Filteraufnahme 100 umfasst.

Die Filteraufnahme 100 umfasst ferner eine Verbindungseinrichtung 112, die an einer zwischen den Schmalseiten 103 und 107 gelegenen Oberfläche 114 der Trägerplatte 102 gebildet ist. Die Verbindungseinrichtung 112 weist ein erstes Aufnahmeverbindungselement 116 auf, das einen nahe der Schmalseite 103 von der Oberfläche 114 senkrecht abstehenden schmalen Steg 118 umfasst, an dessen der Trägerplatte 102 abgewandtem Ende ein erstes und ein zweites Aufnahmebefestigungssegment 120 und 122 in Form von Lagerzapfen 124 und 126 abstehen. Die Lagerzapfen 124 und 126 fluchten miteinander und definieren dabei eine parallel zur Oberfläche 114 und parallel zur Schmalseite 103 verlaufende Zapfenachse 128.

Dem ersten Aufnahmeverbindungselement 116 nahe der Schmalseite 107 diametral gegenüberliegend umfasst die Verbindungseinrichtung 112 ein zweites Aufnahmeverbindungselement 130, das als starrer Haken 132 mit daran ausgebildeter Rastaufnahme 134 ausgebildet ist.

Über eine gedachte Verbindungslinie, die die Mitte des zweiten Aufnahmeverbindungselementes 130 mit dem Steg 118 verbindet, ist der Verlauf einer Filteraufnahmeachse 136 definiert. Das erste und das zweite Aufnahmeverbindungselement 116 bzw. 130 sind bezüglich einer die Filteraufnahmeachse 136 enthaltende Ebene, die senkrecht zur Oberfläche 114 orientiert ist, symmerisch ausgebildet.

Auf der Filteraufnahmeachse 136 zwischen dem ersten und zweiten Aufnahmeverbindungselement 116 bzw. 130 sind ein Leitungszulaufanschluss 138 und ein Leitungsablaufanschluss 140 angeordnet, die mit einem Zulaufkanal 142 bzw. einem Ablaufkanal 144 in Strömungsverbindung stehen. Die Kanäle 142, 144 sind auf der der Oberfläche 114 abgewandten Seite der Trägerplatte 102 angeordnet.

Der Leitungszulaufanschluss 138 weist eine die Trägerplatte 102 durchgreifende Rohraufnahme 146 auf, in der ein als Rückschlagventil ausgebildetes Zulaufventil 148 angeordnet ist. Ein Deckel 150 deckt die Rohraufnahme 146 an der der Oberfläche 114 abgewandten Seite der Trägerplatte 102 ab. In ähnlicher Weise umfasst der Leitungsablaufanschluss 140 eine die Trägerplatte 102 durchgreifende Rohraufnahme 152, in der ein als Rückschlagventil ausgebildetes Ablaufventil 154 angeordnet ist. Die Rohraufnahme 154 trägt an ihrer der Oberfläche 114 abgewandten Seite einen Deckel 156.

An der Oberfläche 114 sind außerdem zwei Gruppen von Anlegegliedern 158 und 160 angeordnet mit jeweils einer Mehrzahl von von der Oberfläche 114 abstehenden Vorsprüngen. Die Gruppen von Anlegegliedern 158 und 160 fassen jeweils ein Oberflächensegment 162 bzw. 164 der Oberfläche 114 ein.

Zum Verbinden der Filtervorrichtung 10 mit der Filteraufnahme 100 kann folgendermaßen vorgegangen werden:

Die Filtervorrichtung 10 wird so an die Filteraufnahme 100 angelegt, dass der Steg 118 in der Aussparung 56 angeordnet wird. Auf diese Weise wirkt der Steg 118 als Ausrichtglied. Die Lagerzapfen 124 und 126 lassen sich in den durch die Haken 50 bzw. 52 gebildeten Hakenaufnahmen anordnen. Die Haken 50 und 52 umgreifen die Lagerzapfen 124 und 126, so dass die Schwenkachse 58 und die Zapfenachse 128 zur Deckung kommen. Auf diese Weise sind die Filtervorrichtung 10 und die Filteraufnahme 100 über das erste Verbindungselement 44 und das erste AufnahmeVerbindungselement 116 verbunden.

Die Ausrichtachse 41 und die Filteraufnahmeachse 136 können zur Deckung gebracht werden, indem die Filtervorrichtung 10 um die Schwenkachse 58 verschwenkt wird. Dadurch wird der Rasthaken 62 dem Haken 132 angenähert und schließlich mit diesem verrastet. In diesem Fall ist die Rastnase 70 in der Rastaufnahme 134 angeordnet. Dadurch ist das zweite Verbindungselement 60 mit dem zweiten AufnahmeVerbindungselement 130 und damit die Filtervorrichtung 10 mit der Filteraufnahme 100 verbunden.

Durch das Zusammenfallen der Ausrichtachse 41 und der Filteraufnahmeachse 136 sind ohne weiteres Zutun des Benutzers der Wasserzulaufanschluss 22 gegenüber dem Leitungszulaufanschluss 138 und der Wasserablaufanschluss gegenüber dem Leitungsablaufanschluss 140 ausgerichtet.

In diesem Fall ist das Rohrstück 28 des Wasserzulaufanschlusses 22 in der Rohraufnahme 146 des Leitungszulaufanschlusses 138 angeordnet. Der Entriegelungsstift 32 beaufschlagt das Zulaufventil 148 mit einer entgegen dessen Rückstellkraft gerichteten Kraft, so dass eine Strömungsverbindung zwischen dem Zulaufkanal 142 und den Zulauföffnungen 30 und 31 hergestellt ist.

In ähnlicher Weise ist das Rohrstück 36 des Wasserablaufanschlusses 24 in der Rohraufnahme 152 des Leitungsablaufanschlusses 140 angeordnet. Der Entriegelungsstift 40 beaufschlagt das Ablaufventil 154 mit einer entgegen dessen Rückstellkraft gerichteten Kraft, so dass eine Strömungsverbindung zwischen den Ablauföffnungen 38 und 39 mit dem Ablaufkanal 144 hergestellt ist.

Die Stützelemente 72 und 74 liegen an den Oberflächensementen 162 bzw. 164 an und stützen die Stirnwand 20 gegenüber der Oberfläche 114 ab, so dass diese einen definierten Abstand zueinander aufweisen.

Zum Lösen der Filtervorrichtung 10 von der Filteraufnahme 100 ist der Druckknopf 82 des Stößels 80 mit einer Lösekraft zu beaufschlagen, die auf den Hakenabschnitt 68 übertragen wird, um die Verrastung zwischen dem Rasthaken 62 und dem Haken 132 zu lösen. Die Filtervorrichtung 10 kann dann um die Schwenkachse 58 geschwenkt werden, und anschließend kann der Umgriff der Haken 50 und 52 um die Lagerzapfen 124 bzw. 126 gelöst und damit die Filtervorrichtung 10 von der Filteraufnahme 100 entfernt werden.

Um die Filtervorrichtung 10 und die Filteraufnahme 100 zu verbinden, ist es für einen Benutzer nicht erforderlich, das Filtergehäuse 12 zu umgreifen, wie dies beispielsweise bei Filtervorrichtungen mit Verbindungselementen zur Herstellung einer Bajonettverbindung vonnöten ist. Dadurch ist zum Einbau der Filtervorrichtung 10 nur wenig Raum erforderlich. Insbesondere können zwei oder mehr benachbarte Filtervorrichtungen mit geringen Abständen voneinander montiert werden. Sowohl zum Verbinden als auch zum Lösen ist der Zugriff des Benutzers nur von einer Seite des Filtergehäuses 12 erforderlich, so dass die Filtervorrichtung 10 auch in schmalen Bauräumen montiert werden kann, die dem Benutzer wenig Raum zum Zugriff bieten.

Die Erfindung betrifft auch ein Wasserabgabegerät, das eine Filtervorrichtung und eine mit der Filtervorrichtung verbindbare Filteraufnahme umfasst. Eine bevorzugte Ausführungsform des erfindungsgemäßen Wasserabgabegerätes umfasst mindestens eine Filtervorrichtung 10 sowie mindestens eine mit der Filtervorrichtung 10 verbundene Filteraufnahme 100.

## Patentansprüche

1. Filtervorrichtung für ein Wasserabgabegerät, das insbesondere zur Abgabe von Trinkwasser ausgelegt ist, umfassend ein Filtergehäuses (12), eine am Filtergehäuse (12) angeordnete Verbindungseinrichtung um die Filtervorrichtung (10) mit einer am Wasserabgabegerät angeordneten Filteraufnahme zu verbinden, sowie zwei am Filtergehäuse (12) angeordnete Wasseranschlüsse (22, 24), über die Wasser in das Filtergehäuse (12) hinein- und aus dem Filtergehäuse (12) herausströmen kann, wobei die Verbindungseinrichtung (42) ein erstes Verbindungselement (44) mit einem ersten Befestigungssegment (46) und einem zweiten Befestigungssegment (48) aufweist, die voneinander durch eine Aussparung (56) beabstandet sind, sowie ein zweites Verbitidungseiement (60), das im Abstand zum ersten Verbindungselement (44) angeordnet ist, wobei zwischen dem ersten und dem zweiten Verbindungselement (44, 60) mindestens ein Wasseranschluss (22, 24) auf einer Ausrichtachse (41) angeordnet ist, deren Verlauf durch das zweite Verbindungselement (60) und die Aussparung (56) definiert ist, und wobei das erste und das zweite Befestigungssegment (46, 48) bezüglich einer die Ausrichtachse (41) umfassenden Ebene symmetrisch zueinander ausgebildet sind und das zweite Verbindungselement (60) symmetrisch zu derselben Ebene ausgebildet ist, **dadurch gekennzeichnet, dass** beide Wasseranschlüsse (22, 24) auf der Ausrichtachse (41) zwischen dem ersten und dem zweiten Verbindungselement (44, 60) angeordnet sind, dass das erste und das zweite Befestigungssegment (46, 48) als von einer Stirnseite des Filtergehäuses (12) abstehende Haken (50, 52) mit Hakenaufnahmen ausgebildet sind, an denen an der Filteraufnahme (100) angeordnete Vorsprünge (124, 126) anordenbar sind, wobei die Haken (50, 52) eine quer zur Ausrichtachse (41) orientierte Schwenkachse (58) definieren, und dass an den Wasseranschlüssen (22, 24) Entriegeiungselemente (32, 40) angeordnet sind, mit denen beim Verbinden der Filtervorrichtung (10) mit der Filteraufnahme (100) an der Filteraufnahme (100) angeordnete Ventile (148, 154) betätigbar sind.

2. Filtervorrichtung nach Anspruch 1, **dadurch gekennzeichnet, dass** das Filtergehäuse (12) längserstreckt ausgebildet ist und dass die Verbindungseinrichtung (42) und die Wasseranschiüsse (22, 24) an einem Kopfende (19) des Filtergehäuses (12) angeordnet sind.

3. Filtervorrichtung nach Anspruch 1 oder 2, **dadurch gekennzeichnet, dass** das erste und das zweite Verbindungselement (44, 60) relativ zueinander beweglich sind und Vorsprünge (50, 52, 70) umfassen, mittels derer an der Filteraufnahme (100) angeordnete Vorsprünge (124, 126, 132) um- oder hintergreifbar sind.

4. Filtervorrichtung nach einem der voranstehenden Ansprüche, **dadurch gekennzeichnet, dass** die Hakenaufnahmen dem zweiten Verbindungselement (60) zugewandt sind.

5. Filtervorrichtung nach einem der voranstehenden Ansprüche, **dadurch gekennzeichnet, dass** das zweite Verbindungselement (60) als von einem Kopfende (19) des Filtergehäuses (12) über die am Kopfende (19) gebildete Stirnseite hinaus abstehender Rasthaken (62) ausgebildet ist, der mit einer an der Filteraufnahme (100) angeordneten Rastaufnahme (134) eine Verrastung bilden kann.

6. Filtervorrichtung nach einem der voranstehenden Ansprüche, **dadurch gekennzeichnet, dass** die Filtervorrichtung (10) ein Betätigungsglied (80) aufweist, mit dem die Verbindungseinrichtung (42) von einer Verbindungsstellung, in der die Filtervorrichtung (10) mit der Filteraufnahme (100) verbunden ist, in eine Lösestellung überführbar ist, in der die Filtervorrichtung (10) von der Filteraufnahme (100) lösbar ist.

7. Filtervorrichtung nach Anspruch 6, **dadurch gekennzeichnet, dass** das zweite Verbindungselement (60) mittels des Betätigungsgliedes (80) mit einer Lösekraft beaufschlagbar ist, um die Verbindung mit der Filteraufnahme (100) zu lösen.

8. Filtervorrichtung nach Anspruch 7, **dadurch gekennzeichnet, dass** das Betätigungsglied (80) als längs der Ausrichtachse (41) ausgerichteter Stößel (80) ausgebildet ist, der am Kopfende des Filtergehäuses (12) verschieblich gelagert ist, wobei sein erstes Ende (82) einem Benutzer zugänglich nahe dem ersten Verbindungselement (44) angeordnet ist und sein zweites Ende (84) am zweiten Verbindungselement (60) anliegt.

9. Filtervorrichtung nach Anspruch 8, **dadurch gekennzeichnet, dass** der Stößel (80) das Kopfende des Filtergehäuses (12) durchgreift.

10. Filtervorrichtung nach einem der voranstehenden Ansprüche, **dadurch gekennzeichnet, dass** die Verbindungseinrichtung (42) mindestens ein Stützelement (72, 74) aufweist, das bei mit der Filteraufnahme (100) verbundener Filtervorrichtung (10) an der Filteraufnahme anliegt.

11. Filtervorrichtung nach einem der voranstehenden Ansprüche, **dadurch gekennzeichnet, dass** die wasserführenden Komponenten der Filtervorrichtung (10) aus Materialien gefertigt sind, die bei einer zur Pasteurisierung von Wasser erforderlichen Temperatur thermisch stabil sind.

12. Filteraufnahme für ein Wasserabgabegerät, wobei die Filteraufnahme mit einer Filtervorrichtung nach einem der voranstehenden Ansprüche verbindbar ist, **dadurch gekennzeichnet, dass** die Filteraufnahme (100) zwei Leitungsanschlüsse (138, 140) und einen Träger (102) umfasst, der ein erstes Aufnahmeverbindungselement (116) aufweist mit einem ersten Aufnahmebefestigungssegment (120), einem zweiten Aufnahmebefestigungssegment (122) und einem zwischen dem ersten und dem zweiten Aufnahmebefestigungssegment (120, 122) angeordneten Ausrichtglied (118), sowie ein zweites Aufnahmeverbindungselement (130), das im Abstand zum ersten Aufnahmeverbindungselement (116) angeordnet ist, und dass zwischen dem ersten und dem zweiten Aufnahmeverbindungselement (116, 130) beide Leitungsanschlüsse (138, 140) auf einer Achse (136) der Filteraufnahme (100) angeordnet sind, deren Verlauf durch das zweite Aufnahmeverbindungselement (130) und das Ausrichtglied (118) definiert ist, und dass die Leitungsanschlüsse (138, 140) Ventile (148, 154) umfassen, die durch an den Wasseranschlüssen (22, 24) der Filtervorrichtung (10) angeordnete Entriegelungselemente (32, 40) betätigbar sind.

13. Filteraufnahme nach Anspruch 12, **dadurch gekennzeichnet, dass** das Ausrichtglied (118) als vom Träger (102) abstehender Steg (118) ausgebildet ist, an dessen dem Träger (102) abgewandtem Ende zwei quer zur Achse (136) der Fiteraufnahme (110) orientierte Lagerzapfen (124, 126) angeordnet sind, die das erste und das zweite Aufnahmebefestigungssegment (120, 122) bilden.

14. Filteraufnahme nach Anspruch 12 oder 13, **dadurch gekennzeichnet, dass** das zweite Aufnahmeverbindungselement (130) eine Rastaufnahme (134) umfasst.

15. Wasserabgabegerät, das insbesondere zur dosierten Abgabe von Trinkwasser ausgelegt ist, umfassend mindestens eine Filtervorrichtung (10) nach einem der Ansprüche 1 bis 11 und mindestens eine mit der Filtervorrichtung (10) verbindbare Filteraufnahme (100) nach einem der Ansprüche 12 bis 14.

## Claims

1. Filtering device for a water dispensing device which is particularly designed to dispense drinking water, comprising a filter housing (12), a connecting device (42) located on the filter housing (12) in order to connect the filtering device (10) to a filter holder located on the water dispensing device, and two water connections (22, 24) located on the filter housing (12), through which water can flow into and out of the filter housing (12), the connecting device (42) having a first connecting element (44) with a first fastening segment (46) and a second fastening segment (48), these being separated by a recess (56), and a second connecting element (60), which is spaced from the first connecting element (44), with at least one water connection (22, 24) being positioned on an alignment axis (41) between the first and the second connecting elements (44, 60), the course of this axis being defined by the second connecting element (60) and the recess (56), the first and second fastening segments (46, 48) being constructed symmetrically to each other with respect to a plane comprising the alignment axis (41) and the second connecting element (60) being constructed symmetrically to the same plane, **characterised in that** both water connections (22, 24) are positioned on the alignment axis (41) between the first and second connecting elements (44, 60), **in that** the first and second fastening segments (46, 48) are in the form of hooks (50, 52) projecting from a front face of the filter housing (12) and having hook recesses, in which the projections (124, 126) located on the filter holder (100) can be positioned, the hooks (50, 52) defining a swivel axis (58) oriented transverse to the alignment axis (41), and **in that** unlocking elements (32, 40) are located on the water connections (22, 24), these unlocking elements serving to actuate valves (148, 154) located on the filter holder (100) when connecting the filtering device (10) to the filter holder (100).

2. Filtering device according to Claim 1, **characterised in that** the filter housing (12) is in elongated form and **in that** the connecting device (42) and the water connections (22, 24) are located at one top end (19) of the filter housing (12).

3. Filtering device according to either Claim 1 or 2, **characterised in that** the first and second connecting elements (44, 60) can be moved with respect to one another and include projections (50, 52, 70) by means of which projections (124, 126, 132) located on the filter holder (100) can be engaged or gripped from behind.

4. Filtering device according to any one of the preceding claims, **characterised in that** the hook recesses are directed towards the second connecting element (60).

5. Filtering device according to any one of the preceding claims, **characterised in that** the second connecting element (60) is formed as a latching hook (62) projecting from one top end (19) of the filter housing (12) over the face formed on the top end (19), which can engage and lock with a latch recess (134) located in the filter holder (100).

6. Filtering device according to any one of the preceding claims, **characterised in that** the filtering device (10) has an actuating element (60), with which the connecting device (42) can be moved from a connection position, in which the filtering device (10) is connected to the filter holder (100), into a release position in which the filtering device (10) can be released from the filter holder (100).

7. Filtering device according to Claim 6, **characterised in that** a release force can be applied to the second connecting element (60) by means of the actuating element (80) in order to release the connection with the filter holder (100).

8. Filtering device according to Claim 7, **characterised in that** the actuating element (80) is in the form of a slide rod (80) oriented along the alignment axis (41), this slide rod being mounted at the top end of the filter housing (12) such that it can be moved, its first end (82) being located close to the first connecting element (44) such that it is accessible to a user and its second end (84) being positioned on the second connecting element (60).

9. Filtering device according to Claim 8, **characterised in that** the slide rod (80) passes through the top end of the filter housing (12).

10. Filtering device according to any one of the preceding claims, **characterised in that** the connecting device (42) has at least one support element (72, 74) which rests against the filter holder if the filtering device (10) is connected to the filter holder (100).

11. Filtering device according to any one of the preceding claims, **characterised in that** the components of the filtering device (10) through which water flows are made from materials which are thermally stable at a temperature required to pasteurise the water.

12. Filter holder for a water dispensing device, the filter holder being able to be connected to a filtering device in accordance with any one of the preceding claims, **characterised in that** the filter holder (100) has two pipe connections (138, 140) and a support (102) which has a first holder connecting element (116) with a first holder fastening segment (120), a second holder fastening segment (122) and an alignment element (118) positioned between the first and second holder fastening segments (120, 122), and a second holder connecting element (130), which is spaced from the first holder connecting element (116), and **in that** both pipe connections (138, 140) are positioned on an axis (136) of the filter holder (100) between the first and second holder connecting elements (116, 130), the course of this axis being defined by the second holder connecting element (130) and the alignment element (118), and **in that** the pipe connections (138, 140) include valves (148, 154) which can be actuated by unlocking elements (32, 40) positioned on the water connections (22, 24) of the filtering device (10).

13. Filter holder according to Claim 12, **characterised in that** the alignment element (118) is in the form of a bar (118) projecting from the support (102), two bearing pins (124, 126) oriented transverse to the axis (136) of the filter holder (110) being located on the end of the bar opposite the support (102), these pins forming the first and second holder fastening segments (120, 122).

14. Filter holder according to either Claim 12 or 13, **characterised in that** the second holder connecting element (130) comprises a latch recess (134).

15. Water dispensing device which is particularly designed for metered dispensing of drinking water comprising at least one filtering device (10) according to any one of Claims 1 to 11 and at least one filter holder (100) which can be connected to the filtering device (10) according to any one of Claims 12 to 14.

## Revendications

1. Dispositif de filtration pour un appareil distributeur d'eau qui est conçu en particulier pour distribuer de l'eau potable, comportant un boîtier de filtre (12), un dispositif de liaison (42) disposé sur le boîtier de filtre (12) afin de relier le dispositif de filtration (10) à un logement de filtre disposé sur l'appareil distributeur d'eau, ainsi que deux prises d'eau (22, 24) disposées sur le boîtier de filtre (12), par lesquelles de l'eau peut s'écouler dans le boîtier de filtre (12) et hors de celui-ci, le dispositif de liaison (42) présentant un premier élément de liaison (44) avec un premier segment de fixation (46) et un second segment de fixation (48) qui sont espacés l'un de l'autre par un évidement (56), ainsi qu'un second élément de liaison (60) qui est disposé à distance du premier élément de liaison (44), entre le premier et le second élément de liaison (44, 60) étant disposée au moins une prise d'eau (22, 24) sur un axe d'alignement (41), dont le tracé est défini par le second élément de liaison (60) et l'évidement (56) et le premier et le second segment de fixation (46, 48) étant réalisés de manière symétrique l'un à l'autre par rapport à un plan comprenant l'axe d'alignement (41) et le second élément de liaison (60) étant réalisé de manière symétrique au même plan, **caractérisé en ce que** les deux prises d'eau (22, 24) sont disposées sur l'axe d'alignement (41) entre le premier et le second éléments de liaison (44, 60), **en ce que** le premier et le second segments de fixation (46, 48) sont réalisés comme des crochets (50, 52) s'éloignant d'un côté frontal du boîtier de filtre (12) avec des logements de crochet, sur lesquels peuvent être disposées des saillies (124, 126) disposées sur le logement de filtre (100), les crochets (50, 52) définissant un axe de pivotement (58) orienté transversalement à l'axe d'alignement (41) et **en ce que** sur les prises d'eau (22, 24) sont disposés des éléments de déverrouillage (32, 40), permettant d'actionner des soupapes (148, 154) disposées sur le logement de filtre (100) lors de la liaison du dispositif de filtration (10) avec le logement de filtre (100).

2. Dispositif de filtration selon la revendication 1, **caractérisé en ce que** le boîtier de filtre (12) est réalisé étiré en longueur et **en ce que** le dispositif de liaison (42) et les prises d'eau (22, 24) sont disposés sur une extrémité de tête (19) du boîtier de filtre (12).

3. Dispositif de filtration selon la revendication 1 ou 2, **caractérisé en ce que** le premier et le second éléments de liaison (44, 60) sont mobiles de manière relative l'un par rapport à l'autre et comportent des saillies (50, 52, 70), au moyen desquelles des saillies (124, 126, 132) disposées sur le logement de filtre (100) peuvent être enveloppées ou engagées par l'arrière.

4. Dispositif de filtration selon l'une quelconque des revendications précédentes, **caractérisé en ce que** les logements de crochet sont tournés vers le second élément de liaison (60).

5. Dispositif de filtration selon l'une quelconque des revendications précédentes, **caractérisé en ce que** le second élément de liaison (60) est réalisé comme un crochet d'encliquetage (62) s'éloignant d'une extrémité de tête (19) du boîtier de filtre (12) au-delà du côté frontal formé sur l'extrémité de tête (19), lequel crochet peut former un encliquetage avec un logement d'encliquetage (134) disposé sur le logement de filtre (100).

6. Dispositif de filtration selon l'une quelconque des revendications précédentes, **caractérisé en ce que** le dispositif de filtration (10) présente un organe d'actionnement (80), avec lequel le dispositif de liaison (42) peut être transporté d'une position de liaison, dans laquelle le dispositif de filtration (10) est relié au logement de filtre (100), à une position de détachement, dans laquelle le dispositif de filtration (10) peut être détaché du logement de filtre (100).

7. Dispositif de filtration selon la revendication 6, **caractérisé en ce que** le second élément de liaison (60) peut être sollicité à l'aide de l'organe d'actionnement (80) par une force de détachement afin de détacher la liaison avec le logement de filtre (100).

8. Dispositif de filtration selon la revendication 7, **caractérisé en ce que** l'organe d'actionnement (80) est réalisé comme un coulisseau (80) aligné le long de l'axe de l'alignement (41), qui est logé de manière mobile sur l'extrémité de tête du boîtier de filtre (12), sa première extrémité (82) étant disposée de manière accessible à un utilisateur près du premier élément de liaison (44) et sa seconde extrémité (84) reposant sur le second élément de liaison(60).

9. Dispositif de filtration selon la revendication 8, **caractérisé en ce que** le coulisseau (80) traverse l'extrémité de tête du boîtier de filtre (12).

10. Dispositif de filtration selon l'une quelconque des revendications précédentes, **caractérisé en ce que** le dispositif de liaison (42) présente au moins un élément d'appui (72, 74) qui repose sur le logement de filtre lorsque le dispositif de filtration (10) est relié au logement de filtre (100).

11. Dispositif de filtration selon l'une quelconque des revendications précédentes **caractérisé en ce que** les composants aquifères du dispositif de filtration (10) sont fabriqués en matériaux qui sont stables thermiquement à une température nécessaire à la pasteurisation de l'eau.

12. Logement de filtre pour un appareil distributeur d'eau, le logement de filtre pouvant être relié à un dispositif de filtration selon l'une quelconque des revendications précédentes, **caractérisé en ce que** le logement de filtre (100) comporte deux raccords de conduite (138, 140) et un support (102) qui présente un premier élément de liaison de logement (116) avec un premier segment de fixation de logement (120), un second segment de fixation de logement (122) et un organe d'alignement (118) disposé entre le premier et le second segments de fixation de logement (120, 122), ainsi qu'un second élément de liaison de logement (130) qui est disposé à distance du premier élément de liaison de logement (116) et **en ce qu'**entre le premier et le second éléments de liaison de logement (116, 130) sont disposés les deux raccords de conduite (138, 140) sur un axe (136) du logement de filtre (100), dont le tracé est défini par le second élément de liaison de logement (130) et l'organe d'alignement (118) et **en ce que** les raccords de conduite (138, 140) comportent des soupapes (148, 154) qui peuvent être actionnées par des éléments de déverrouillage (32, 40) disposés sur les prises d'eau (22, 24) du dispositif de filtration (10).

13. Logement de filtre selon la revendication 12, **caractérisé en ce que** l'organe d'alignement (118) est réalisé comme une nervure (118) s'éloignant du support (102), sur l'extrémité éloignée du support (102) de laquelle sont disposés deux tourillons (124, 126) orientés vers l'axe (136) du logement de filtre (110), qui forment le premier et le second segments de fixation de logement (120, 122).

14. Logement de filtre selon la revendication 12 ou 13, **caractérisé en ce que** le second élément de liaison de logement (130) comporte un logement d'encliquetage (134).

15. Appareil distributeur d'eau qui est conçu en particulier pour la distribution dosée d'eau potable, comprenant au moins un dispositif de filtration (10) selon l'une quelconque des revendications 1 à 11 et au moins un logement de filtre (100) pouvant être relié au dispositif de filtration (10) selon l'une quelconque des revendications 12 à 14.
